(19) Europäisches Patentamt
European Patent Office
Office européen des brevets

(11) EP 0 420 254 B1

(12) EUROPEAN PATENT SPECIFICATION

(45) Date of publication and mention
of the grant of the patent:
**11.06.1997 Bulletin 1997/24**

(51) Int Cl.6: **G06F 15/80**

(21) Application number: **90118592.6**

(22) Date of filing: **27.09.1990**

(54) **Data processing system**

Datenverarbeitungsanlage

Système de traitement de données

(84) Designated Contracting States:
**BE DE FR GB IT NL SE**

(30) Priority: **28.09.1989 JP 253248/89**

(43) Date of publication of application:
**03.04.1991 Bulletin 1991/14**

(73) Proprietors:
• **YOZAN INC.**
**Tokyo 155 (JP)**
• **SHARP KABUSHIKI KAISHA**
**Osaka 545 (JP)**

(72) Inventors:
• **Takatori, Sunao**
**Tokyo 112 (JP)**
• **Kumagai, Ryohei**
**Tokyo 112 (JP)**
• **Matsumoto, Koji**
**Tokyo 112 (JP)**
• **Yamamoto, Makoto**
**Tokyo 112 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
• **NEURAL NETWORKS, vol. 1, no. 2, 1988, pages 119-130, Elmsford, NY, US; K. FUKUSHIMA: "Neocognitron: A hierarchical neural network capable of visual pattern recognition"**
• **IEEE INTERNATIONAL CONFERENCE ON NEURAL NETWORKS, San Diego, California, 24th - 27th July 1988, pages 525-532, IEEE, New York, US; T. SAMAD: "Towards connectionist rule-based systems"**
• **IJCNN INTERNATIONAL JOINT CONFERENCE ON NEURAL NETWORKS, Washington, 19th - 22nd June 1989, pages 251-258; T. MATSUOKA et al.: "Syllable recognition using integrated neural networks"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates to a data processing system based on a neural network.

PRIOR ART

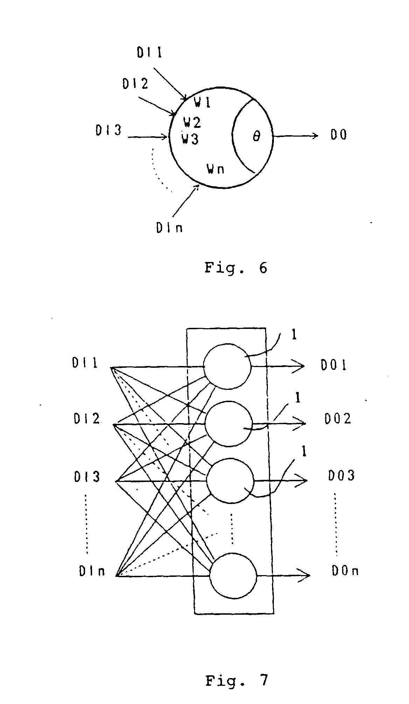

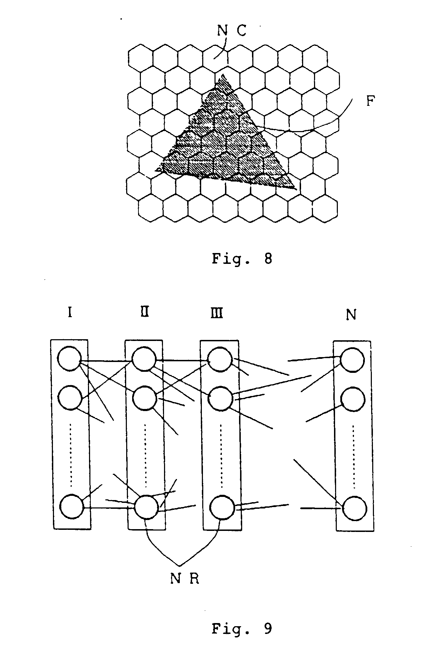

The neural network in a neural network kind of data processing system is constructed in a layer style using neuron model in Fig. 6 in a parallel architecture as shown in Fig. 7. As to neuron 1, data DI1, DI2, DI3, ..., DIn inputted from outside are multiplied by the weights W1, W2, W3, ..., Wn, respectively. Data D0 is outputted according to the comparison between the sum of the products and threshold $\Theta$. Though it is possible to use various kinds of methods to compare, it is settled that output data D$\Theta$ becomes "1" when the sum is greater than or equal to a threshold $\Theta$, and that D$\Theta$ become "0" when the sum is less than threshold $\Theta$.

Conventional neural networks construct the neural layer by setting neurons in parallel. Simultaneously, it is constructed by connecting the neural layers in series: the neuron in each layer is connected to all neurons in adjacent layers.

Document NEURAL NETWORKS, vol. 1, no. 2, 1988, pages 119-130, Elmsford, NY, US; K. FUKUSHIMA : "Neocognitron : A hierarchical neural network capable of visual pattern recognition" discloses a hierarchical multilayered network, and having variable connections between the cells in adjoining layers. Said network can be trained to recognize a set of patterns. Once finished the process of learning, pattern recognition is performed on the basis of similarity in shape between patterns, and is not affected by deformation, nor by changes in size, nor by shifts in the position of the input of the patterns.

Document EP-A-0 411 341 discloses a DPS including a plurality of neural layers equal in number to the abstraction degree between input and output data.

SUMMARY OF THE INVENTION

As numerous neurons are in each layer, the number of connections becomes enormous by connecting a neuron to all neurons in adjacent layers. Consequently, a data processing system constructed by such neural network becomes very large.

The present invention intends to solve the above problems of the prior art and has an object to execute a data processing system that has a small size by limiting the number of connections between neurons.

A data processing system according to the present invention is characterized as set out in claims 1 and 2.

BRIEF DESCRIPTION OF THE DRAWINGS

Fig. 1 (a) shows a diagram of the first embodiment of a data processing system.
Fig. 1 (b) shows a diagram of the second embodiment of a data processing system.
Fig. 1 (c) shows a diagram of the third embodiment of a data processing system.
Fig. 2 (a) shows a diagram of the fourth embodiment of a data processing system.
Fig. 2 (b) shows a diagram of the fifth embodiment of a data processing system.
Fig. 2 (c) shows a diagram of the sixth embodiment of a data processing system.
Fig. 3 (a) shows a diagram of the seventh embodiment of a data processing system.
Fig. 3 (b) shows a diagram of the eighth embodiment of a data processing system.
Fig. 3 (c) shows a diagram of the ninth embodiment of a data processing system.
Fig. 4 (a) shows a diagram of the tenth embodiment of a data processing system.
Fig. 4 (b) shows a diagram of the eleventh embodiment of a data processing system.
Fig. 4 (c) shows a diagram of the twelfth embodiment of a data processing system.
Fig. 5 is a diagram of an example showing the relationship among neural networks and neural cells.
Fig. 6 shows a neural model.
Fig. 7 shows an example of a neural layer.
Fig. 8 shows neural cells.
Fig. 9 shows the layers of neural cells in Fig. 8.
Fig. 10 shows the structure of neural cells and that of neural layer for the post-processing.
Fig. 11 shows an edge extracting processing system of neural cells in Fig. 10.
Fig. 12 is a diagram of a corner extracting processing system of neural cells in Fig. 10.
Fig. 13 shows a diagram of a variation of Fig. 11.
Fig. 14 shows a diagram of an integration processing system in later step of neural processing system.

EP 0 420 254 B1

Fig. 15 is a diagram to show pseudo-corners in a figure.
Fig. 16 is a diagram to show the relationship among neurons in plane.
Fig. 17 is a diagram to show the relationship between distance and weight of neurons.

## PREFERRED EMBODIMENT OF THE PRESENT INVENTION

Hereinafter, an embodiment of the data processing system according to the present invention is described with referring to the attached drawings.

In Fig. 8, a data processing system comprises plural neural cells labelled NC, which are formed in a hexagonal configuration: forming a honeycombed style as a whole.

Usually, in image processing, processing is performed by dividing an image into units of area. The units of area is an area of a square or a rectangle of 3x3 pixels or so, which is caused by the restriction of hardware for scanning on an image. The best way of using these units of area is to share its boundary with equal condition of as many units of area as possible in peripheral relation to one another. Therefore, the honeycombed structure gives an advantageous processing condition. As the structure of the neural layer can be set independent of the image scanning hardware, such good units of area can be set. That is, it is possible to adapt the style of processing by setting different units of area on the neural net side, not in input system. Digital pixel data is inputted to a data processing system through the input system. In Fig. 8, triangle F is inputted to the data processing system.

Each neural cell NC comprises plural neural layers (Fig. 9), which is constructed by settling plural neurons N in parallel. Namely, Fig. 9 shows the structure of a neural cell. In this example, neuron NR in each neural layer is connected to all neurons NR in adjacent neural layers. An output of the n-th neural layer becomes an input of (N+1)th neural layer. The inputted data is processed by each neural layer sequentially, enabling the last output to be obtained.

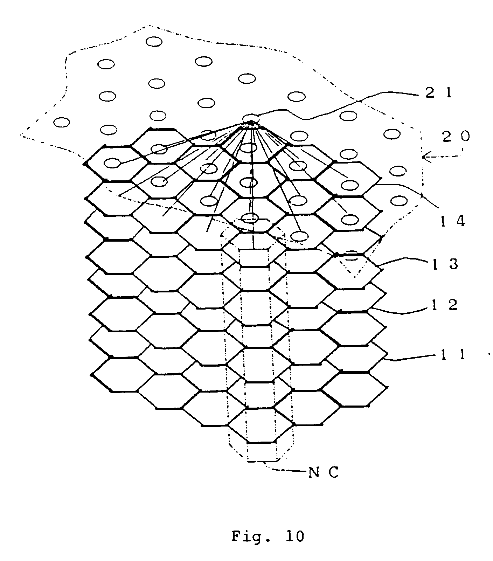

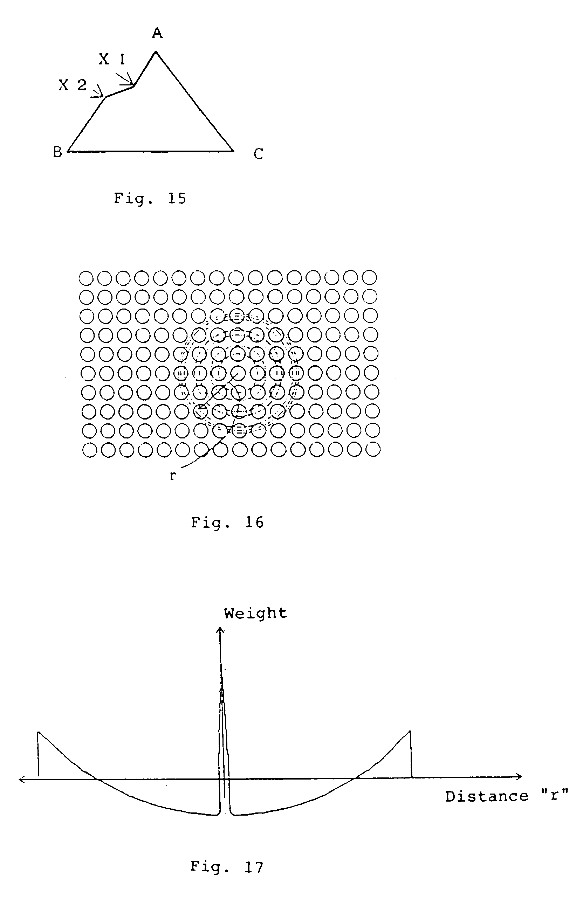

Fig. 10 shows the relationship among neural layers 11, 12, 13, 14 and 20 as a model showing a plurality of hexagonal cells: neural layer 20 is for neural cells and post-processing (It is described later with referring to Fig. 16.).

In Fig. 10, plural neural layers 11, 12, 13 and 14 are divided into hexagonal neural cells NC. That is, each neural cell NC comprises plural neural layer 11, 12, 13 and 14, each of which neural layers comprise a plurality of neurons for processing data, respectively. In each neural cell NC, a neuron is connected to a neuron in adjacent neural layers but not connected to a neuron contained in other neural cells NC. Neural cells NC are not connected to each other: data is given and received in only one neural cell. A Neural cell NC must not necessary include all neural layers usually provided in data processing systems including neural networks : a neural cell NC can be adapted to include only two neural layers, for instance.

The data processing system possesses a processing function which varies according to the object by learning. The case for recognizing a simple geometric figure is explained below.

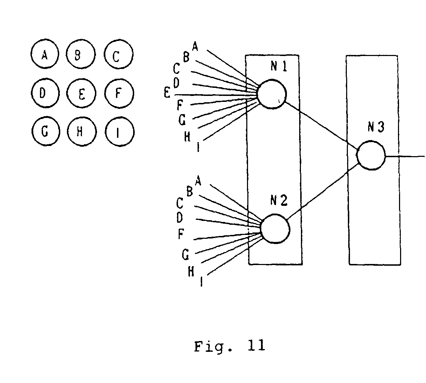

An example of a neural layer used to extract an edge is shown in Fig. 11. In Fig. 11, neurons A to I for 3x3 pixels are shown. These neurons generate output "1" for an input of high brightness. Assuming the outputs of neurons A to I to be A to I, the existence of the edge except the isolated point can be expressed in formula (1).

$$E(\overline{A}+\overline{B}+\overline{C}+\overline{D}+\overline{F}+\overline{G}+\overline{H}+\overline{I})(A+B+C+D+F+G+H+I)=I \tag{1}$$

Outputs A to I are inputted to neuron N1, and outputs A to D and F to I are inputted to neuron N2. Outputs of neurons N1 and N2 are inputted to neuron N3. For example, the weights of neurons from N1 to N3 and threshold are settled as shown in table 1 to 3.

Table 1

| Weights and Threshold of Neuron N1 | | |
|---|---|---|
| Weights to output A | WIA | -1 |
| Weights to output B | WIB | -1 |
| Weights to output C | WIC | -1 |
| Weights to output D | WID | -1 |
| Weights to output E | WIE | 9 |
| Weights to output F | WIF | -1 |
| Weights to output G | WIG | -1 |
| Weights to output H | WIH | -1 |
| Weights to output I | WII | -1 |
| Threshold Θ | ΘI | 0.5 |

3

## Table 2

### Weights and Threshold of Neuron N2

| | | |
|---|---|---|
| Weights to output A | W2A | −1 |
| Weights to output B | W2B | −1 |
| Weights to output C | W2C | −1 |
| Weights to output D | W2D | −1 |
| Weights to output F | W2F | −1 |
| Weights to output G | W2G | −1 |
| Weights to output H | W2H | −1 |
| Weights to output I | W2I | −1 |
| Threshold θ | θ2 | 0.5 |

Table 3

| Weights and Threshold of Neuron N3 | | |
|---|---|---|
| Weights to output N1 | W3N1 | 1 |
| Weights to output N2 | W2N2 | 1 |
| Threshold Θ | | 1.5 |

Neuron N1 performs the processing according to formula (2).

$$E(\overline{A}+\overline{B}+\overline{C}+\overline{D}+\overline{F}+\overline{G}+\overline{H}+\overline{I}) \tag{2}$$

Neuron N2 performs the processing according to formula (3).

$$A+B+C+D+F+G+H+I \tag{3}$$

Neuron N3 corresponds to an AND logic between formulas (2) and (3).

Therefore, neuron N3 generates an output "1" when an edge of a figure is projected in neuron E.

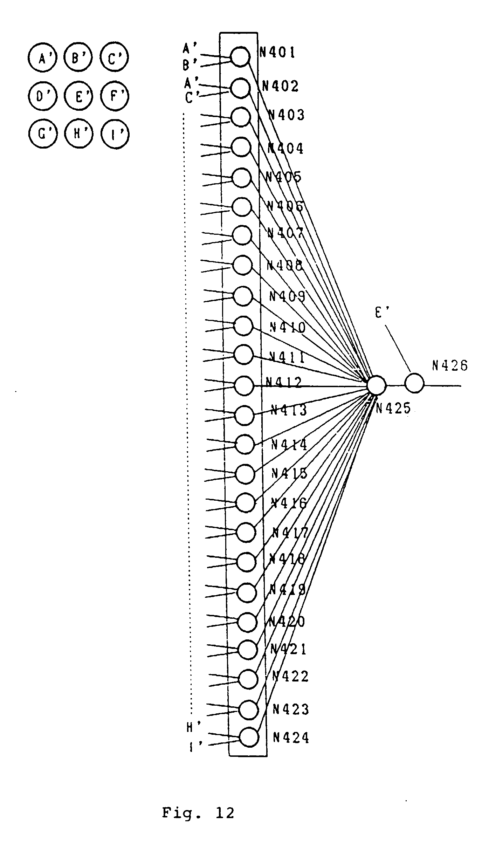

An example of a neural network to extract a corner is explained below according to Fig. 12. The input of the neural network is the output of neuron N3 in Fig. 11. In Fig. 12, neurons N3 of A' to I' corresponding to neurons from A to I are indicated. The logic to extract the corner is as in formula (4).

$$E'(A'B'+A'C'+A'D'+A'F'+A'G'+A'H'+B'C'+B'D'+B'F'+B'$$

$$G'+B'I'+C'D'+C'F'+C'H'+C'I'+D'G'+D'H'+D'I'+F'G'+F'$$

$$H'+F'I'+G'H'+G'I'+H'I')=1 \tag{4}$$

Neurons N401 to N424 and N425 are set for the processing. Outputs of A' to D', F' to I' are inputted to neurons N401 to N424 with the combination shown in Table 4. The weights and thresholds corresponding to these inputs are shown in the table.

## Table 4

| Neuron | Input | Weight | Threshold |
|--------|-------|--------|-----------|
| N401 | A'B' | 1 | 1.5 |
| N402 | A'C' | 1 | 1.5 |
| N403 | A'D' | 1 | 1.5 |
| N404 | A'F' | 1 | 1.5 |
| N405 | A'G' | 1 | 1.5 |
| N406 | A'H' | 1 | 1.5 |
| N407 | B'C' | 1 | 1.5 |

| N408 | B'D' | 1 | 1.5 |
| N409 | B'F' | 1 | 1.5 |
| N410 | B'G' | 1 | 1.5 |
| N411 | B'I' | 1 | 1.5 |
| N412 | C'D' | 1 | 1.5 |
| N413 | C'F' | 1 | 1.5 |
| N414 | C'H' | 1 | 1.5 |
| N415 | C'I' | 1 | 1.5 |
| N416 | D'G' | 1 | 1.5 |
| N417 | D'H' | 1 | 1.5 |
| N418 | D'I' | 1 | 1.5 |
| N419 | F'G' | 1 | 1.5 |
| N420 | F'H' | 1 | 1.5 |
| N421 | F'I' | 1 | 1.5 |
| N422 | G'H' | 1 | 1.5 |
| N423 | G'I' | 1 | 1.5 |
| N424 | H'I' | 1 | 1.5 |

Outputs N401 to N424 are inputted to neuron N425. Its weight and threshold are shown in Table 5.

Table 5

| Neuron | Weight | Threshold |
|---|---|---|
| From N401 to N424 | 1 | 1.5 |

This is equivalent to an OR logic.

The output of neuron N425 and E' are inputted to neuron N426. Their weights and thresholds are shown in Table 6.

Table 6

| Neuron | Weight | Threshold |
|---|---|---|
| N425 | 1 | 1.5 |
| N424 | 1 | |

This is equivalent to an AND logic.

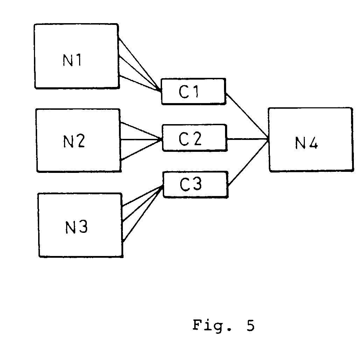

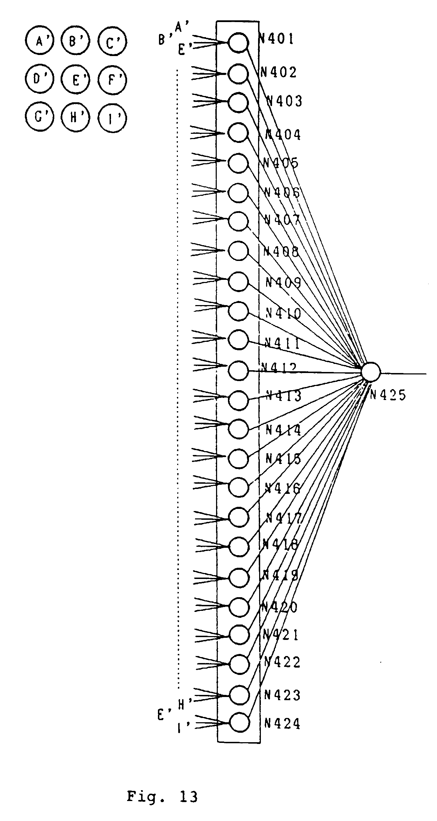

Settlement of above weights are executed automatically by learning in a data processing system, and the most appropriate association can be executed by suitable learning. Settling factually which data is to be inputted to each layer beforehand, can improve the efficiency of the action of a neuron. For example, as to the neural network in Fig. 5, when data E' is inputted with A' to D' and F' to I' simultaneously to the first neural layer, a neural network with the same function of the one in Fig. 11 can be constructed (Fig. 13). In this case, the number of layers can be decreased by one layer, but the number of synapses in the first neural layer is increased by 24 and the number of connecting lines increases remarkably. That is, it can be thought that: as input E' act to the result of logic computation (A'B'+...), it has the same level of abstraction of the logic computation in the parentheses: and the efficiency of the action of a neuron can be improved by setting to which layer data is to be inputted beforehand, according to the degree of abstraction of data.

Introducing the concept of degrees of abstraction of data, the definitions below are considered.

1. The degree of abstraction of data increases by one after processing of one neural layer.
2. Every input to the same neural layer has the same degree of abstraction of data.

According to these definitions, the necessary number of neural layers is 4 (when the structures in Fig. 11 and Fig. 13 are adopted) or 5 (when the structures in Fig. 11 and Fig. 12 are adopted). Assuming the degrees of abstraction of pixel data (inputs to neurons from A to I) to be 0, the degree of the last output is 4 or 5.

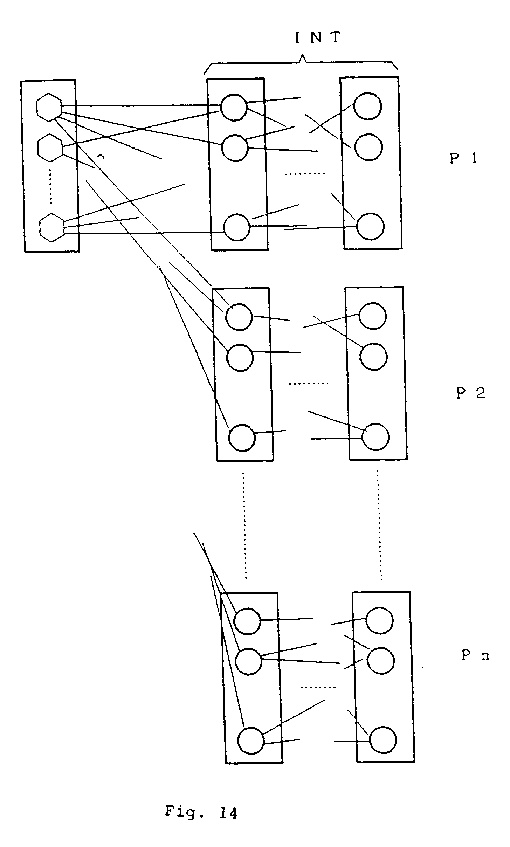

The output, which is analyzed to determine if edge or corner are detected, is generated in every neural cell using the processing described above. The judging output is inputted to the neural layer group for integration INT as shown in Fig. 14. The data to be processed in neural layer group INT has a higher degree of abstraction than that in the previous neural layer.

Neural layer group INT comprises a plurality of processing systems P1 to Pn, each of which has a layer structure consisting of a plurality of neural layers. Processing systems from P1 to Pn are classified according to, for example, the figure to be recognized: it means, for instance, P1 takes part in triangles, P2 takes part in rectangles, ...Pn takes part in figures with (n+2) sides.

The output from the neural cell in the neural layer previous to the neural layer group for integration INT is the signal to show the existence or non-existence of an edge of a figure to be recognized in the neural cell ("ES", hereinafter) and the signal to show the existence of corner ("CS", hereinafter). However, pseudo-corners like x1 and x2 in Figure 16 may be generated on a side by irregularity of a figure itself or noise even on a simple triangle.

As for the processing system for a triangle, such an incorrect corner signal is removed, original corners A, B and C are emphasized, and coordinate values, etc. are outputted. Fig. 15 can be thought for neural network to delete the emphasis of corner A, B and C, and pseudo-corner.

The neural network in Fig. 16 comprises the neuron corresponding to the neural cell NC. Each neuron is connected to all neural cell NC in the next layer as neuron 21 in Fig. 10. The weight of each neuron is the maximum for the input of its corresponding neural cell CS, minus weight of maximal absolute value for peripheral neural cells of its corresponding neural cell, and more distant, more weighted. This relationship is expressed in the graph of Fig. 17.

The corner signals of pseudo-corner generated on a side is weakened and those of corners A, B, and C are emphasized. In Fig. 17, though the relationship between distance and weight has approximately a second order curve, other monotonous increasing curves can be adopted.

Rosenblatt's "Perceptrons" suggests the structure to perform emphasizing contour of an ignition pattern by giving the connection of restraint-type to feed-back system which is from reaction layer to union layer: but there is no suggestion concerning feed-forward-like connection of restraint type.

The data to be given to each processing system of neural layer group for integration INT is the one abstracted in a neural cell, that is, a higher degree of data than the data inputted to said Neural cell NC. When an image processing system with the ability to abstract the data of corner and edge is used as input system, data can be inputted to a neural layer group for integration INT of neural layer group. When pixel data and characteristics data coexist together, the neuron action can be more efficient by inputting a higher degree of abstraction of data like corner into the neural layer in a later step. Calculating beforehand the difference of degrees of abstraction between input data and the data to be finally outputted, a minimum number of neural layers can be obtained: namely, the expected object can be achieved.

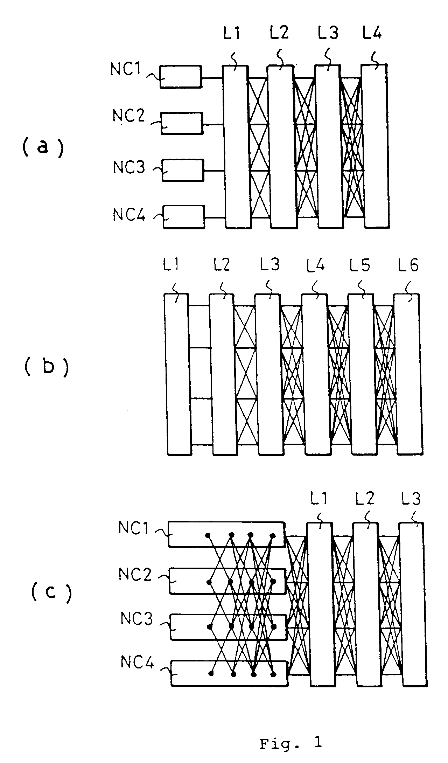

As for the data processing system related to in the present invention, neurons adjacent to one another are not combined in settled parts as described later referring to Fig. 1 to Fig. 4. The number of connections between neurons - that is, the number of synapses - is controlled to be the minimum.

Fig. 1 (a) shows the first embodiment. The data processing system in this embodiment comprises neural cells NC1 to NC4 at the input side, that is on the first processing step, and neural layers L1 to L4 at the output side, that is the later processing steps. A neural cell comprises a plurality of neural layers, as explained referring to Fig. 9, and each neural layer comprises a plurality of neurons. A neuron in each neural layer is connected to all neurons in adjacent neural layers, but is not connected to the neurons contained in other neural cells. In other words, neural cells from NC1 to NC4 are independent and data is not transmitted to or from neural cells NC1 to NC4 among then.

Neural cells from NC1 to NC4 are connected to neural layer L1. Only neurons adjacent each other are connected in Neural layers L1 to L4. Neurons in neural cells NC1 to NC4 are connected to only a part of the neurons contained in neural layer L1, and neurons contained in neural layer L1 are connected to a part of neurons contained in neural layer L2. The number of connections between neurons contained in neural layer L1 and L2 respectively is higher than that between the neurons contained in neural layer L1 and neural cells NC1 to NC4. In the same way, the neurons contained in neural layer L2 are connected to a part of the neurons contained in neural layer L3, and the number of connections between neurons contained in layers L2 and L3 respectively is higher than that between the neurons contained in neural layers L1 and L2 respectively. The neurons contained in neural layer L3 are connected to all neurons contained in neural layer L4. The number of connections between neural layers increases with every further neural layer.

Such a structure where the number of connections increases with every further neural layer is effective when it is necessary to input signals to a lot of neurons in adjacent neural layers, for example, the case where the information processed and divided is integrated efficiently, because the relationship between data to be outputted to further neurons becomes closer at later processing steps carried out by further neural layers although it is not close in earlier processing steps of the neural layers. The connections between neurons with no reflection to data being actually processed are omitted, and thus it is possible to control the number of connections to be the minimum possible and the size of the data processing system can thus be reduced.

Fig. 1 (b) shows the second embodiment, a Data processing system which does not comprise neural cells but comprises neural layers L1 to L6. Neurons contained in neural layer L1 are connected to a part of the neurons contained in neural layer L2. Likewise, neurons contained in neural layer L2 are connected to a part of the neurons contained in neural layer L3: the number of connections is higher than that between neural layer L1 and L2. Neurons contained in neural layer L3 are connected to a part of neurons contained in neural layer L4: the number of connections is higher than that of the previous one. Neurons contained in neural layer L4 are connected to all neurons contained in neural layer L5 and neurons contained in neural layer L5 are connected to all neurons contained in neural layer L6.

Also in this example, the number of connections between neurons of adjacent neural layers increases at later processing steps carried out by further neural layers.

Therefore, the second embodiment is also effective in the case where the relationship between data outputted from neurons becomes closer at later processing steps carried out by further neural layers. The number of connections can be controlled to be the minimum possible and the size of the data processing system can be reduced by omitting the connections between neurons which are not involved in the data processing.

Fig. 1 (c) shows the third embodiment. The data processing system according to this embodiment comprises neural cells NC1 to NC4 and neural layers L1 to L3. Neurons contained in each neural cell are connected to a part of the neurons contained in other neural cells, which differentiates this connection from the connection showed in Fig. 1 (a). The neurons in each neural cell are completely unconnected from other neurons in the same neural cell, but connected to a part of neurons in a different neural cell but taking place in a further processing step within the neural cell: the number of connections increases at later processing steps.

As to the neurons contained in neural layers L1 to L3, each neuron is connected to all neurons contained in adjacent neural layers.

Adopting this structure, the number of connections can be controlled to be the minimum possible and the size of the data processing system can be reduced by omitting the connections between neurons which are not involved in the data processing, even when neurons contained in a neural cell have mutual relationship and are connected to each other at a later processing step.

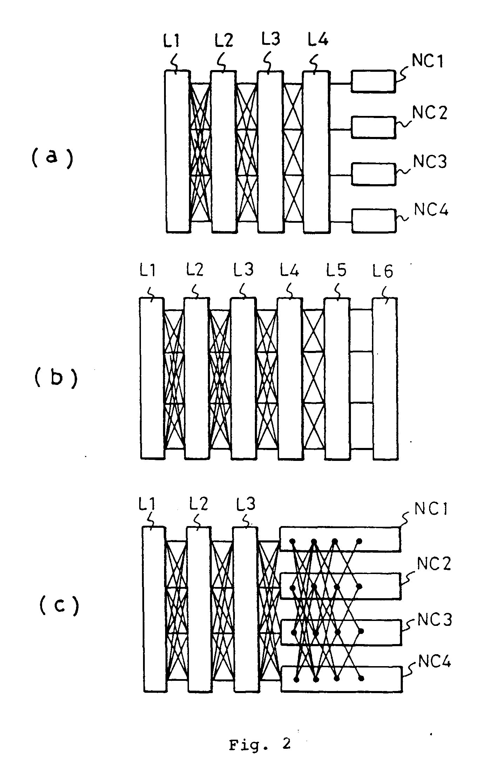

Fig. 2 (a) to 2 (c) shows the structure where neural layers placed nearer to the output side - that is, later processing steps - have a small number of connections among neurons of adjacent layers that is, the opposite of the structures shown in Fig. 1 (a) to (c).

Fig. 2 (a) shows the fourth embodiment. The data processing system in this embodiment comprises neural layers L1 to L4 at the input side and neural cells NC1 to NC4 at the output side. The neural cell comprises plural neural layers in the same way as shown in the first embodiment. A neuron in each neural layer is connected to all neurons in adjacent neural layers but is not connected to the neurons in other neural cells.

In neural layers L1 to L4 neurons contained in adjacent layers are connected to each other. The last processing step, neural layer L4, is connected to neural cells NC1 to NC4. Each neuron contained in neural layer L1 is connected to all the neurons contained in neural layer L2, whose neurons are connected to only a part of the neurons contained in neural layer L3. Likewise, the neurons contained in neural layer L3 are connected to only a part of the neurons contained in neural layer L4. The number of connections between each neural layer decreases at later processing steps.

This structure where the number of connections decreases at later processing steps is effective in the case that the relationship between data to be outputted is close but becomes less effective at later processing steps and it is not necessary to input data to many neurons in adjacent neural layers; for example, in the case where plural independent parameters are outputted, which are further inputted to a separate control system. The connection between neurons which have no influence in the data processing is omitted. Therefore, the number of connections can be controlled to be the minimum possible and it is thus possible to reduce the size of the data processing system.

Fig. 2 (b) shows the fifth embodiment. The data processing system does not comprise neural cells but comprises neural layers from L1 to L6. The neurons in neural layer L1 are connected to all the neurons in neural layer L2, whose neurons are connected to all the neurons in neural layer L3. The neurons in neural layers L3, L4 and L5 are connected to a part of neurons in neural layers L4, L5 and L6, respectively.

Also in this embodiment, the number of connections between neurons of respective neural layers decreases at later processing steps, and this is effective in the case where the relationship between data to be outputted becomes weaker at later processing steps. It is possible to control the number of connections to be the minimum possible and to reduce the size of the data processing system by omitting the connection between neurons which are not involved in the data processing. Comparing to the embodiment in Fig. 2 (a), with the present embodiment, the structure of the present embodiment can separate parameters while decreasing the number of layers and synapses because the separation of independent parameters is executed gradually.

Fig. 2 (c) shows the sixth embodiment. The data processing system in this embodiment comprises neural layers L1 to L3 and neural cells NC1 to NC4. Differently from Fig. 2 (a), neurons in a neural cell are connected to a part of the neurons contained in another neural cell. The neurons contained in a neural cell are connected to neurons in another neural cell. The number of connections decreases as later step and in the last step, they are not be connected to neurons contained in other neural cells. On the other hand, each neuron contained in neural layers L1 to L3 is connected to all the neurons contained in adjacent neural layers.

Therefore, if neurons in a neural cell are connected at a previous processing step, the number of connections can be controlled to be the minimum possible and the size of the data processing system can be reduced by omitting the connections between neurons which are not involved in the data processing, in the same way as in the embodiment showed in Fig. 2 (b).

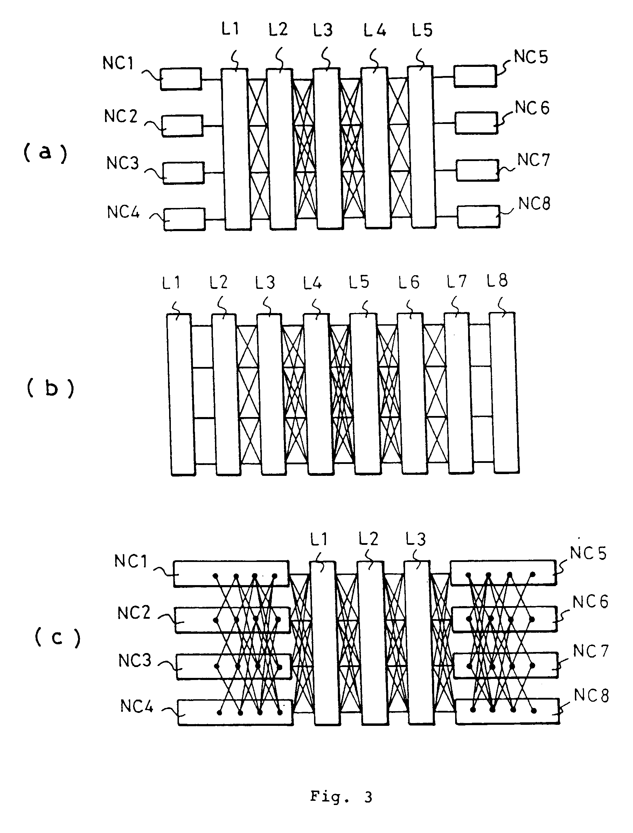

Fig. 3 (a) shows the seventh embodiment. The data processing system of this embodiment comprises neural cells NC1 to NC4 in the input side, NC5 to NC8 in the output side, and neural layers L1 to L5 in the middle. Neural cells NC1 to NC8 have the same structure as the one shown in the first and the fourth embodiments. That is, neural cells NC1 to NC4 are separated from each other and the neurons contained therein are not connected to other neurons contained in other neural cells.

Neural cells NC1 to NC4 are connected to neural layer L1 and neural cells NC5 to NC8 are connected to neural layer L5. Neurons contained in neural layers L1 to L5 are connected to neurons contained in adjacent layers respectively. Neurons in neural cells NC1 to NC4 are connected to only a part of neurons contained in neural layer L1, and neurons contained in neural layer L1 are also connected to only a part of neurons contained in neural layer L2. The number of connections between neural layers L1 and L2 is more higher than that between neural cells NC1 to NC4 and neural layer L1. In the same way, neurons contained in neural layer L2 are connected to only a part of neurons contained in neural layer L3: the number of connections is higher than that between neural layer L1 and L2. Up to here, the number of connections between neurons increases at later processing steps. The number of connections between neurons contained in neural layers L3 and L4 is the same as that between neurons contained in neural layers L2 and L3. The number of connections between neurons contained in neural layers L4 and L5 is less than that between neurons contained in neural layers L3 and L4. The number of connections between neurons contained in neural layer L5 and neural cells from NC5 to NC8 is even smaller than that between neurons contained in neural layers L4 and L5.

In the present embodiment, the number of connections between, neurons in the neighborhood of the first processing step increases at later processing steps, and the number of connections between neurons in the neighborhood of the last processing step decreases at later processing steps.

Such structure is effective in the case where the relationship between data outputted from each neuron is weak at the first and last processing steps. The size of the data processing system can be reduced by omitting the connection between neurons which have no influence in the data processing.

Fig. 3 (b) shows the eighth embodiment. The data processing system does not comprise any neural cell but comprises neural layers L1 to L8. Neurons in neural layer L1 are connected to only a part of neurons in neural layer L2. Likewise, neurons contained in neural layers L2 and in L3 are connected to a part of neurons contained in neural layers L3 and L4, respectively. The number of connections between neurons contained in adjacent neural layers increases at later processing steps, that is, from neural layer L1 towards neural layer L4. All neurons contained in neural layer L4 are connected to all the neurons in L5.

The neurons contained in neural layer L5 are connected to only a part of neurons in L6, and those neurons contained in neural layer L6 are connected to only a part of neurons contained in neural layer L7. The number of connections between neurons contained in neural layers L6 and L7 respectively decreases with respect to the number of connections between neurons contained in neural layers L5 and L6. Similarly, neurons contained in neural layer L7 are connected to only a part of neurons contained in L8: the number of connections is smaller than that between neurons contained in neural layers L6 and L7. In later processing steps occurring after neural layer L5, the number of connections decreases towards the later processing step.

In the structure shown in the eighth embodiment the size of the data processing system is also reduced by omitting the connection between neurons that are not involved in the data processing in case that the relationship between data to be outputted from each neuron is weak at the first and last processing steps.

Fig. 3 (c) shows the ninth embodiment. The data processing system showed in this embodiment comprises neural cells NC1 to NC4 at the input side, neural cells NC5 to NC8 at the output side, and neural layers L1 to L3 in the middle. Neural cells NC1 to NC4 are connected to neural layer L1, and neural cells NC5 to NC8 are connected to neural layer L3.

Neural cells shown in fig. 3 (c) are, different from the neural cells of the embodiment shown in Fig. 3 (a). Neural cells shown in fig. 3 (c) are connected to a part of neurons in adjacent neural cells. Though the neurons in neural cells NC1 to NC4 are separated completely from neurons contained in other neural cells in the first step, they are connected to a part of neurons contained in other neural cells at later processing steps: the number of connections increases at later processing steps. In the meantime, though neurons in neural cells NC5 to NC8 are separated perfectly from neurons contained in other neural cells at the last processing step, they are connected to a part of neurons contained in other neural cells at previous processing steps: the number of connections increases towards previous previous processing steps.

Each neuron contained in neural layers L1 to L3 is connected to all the neurons contained in adjacent neural layers. Each neuron contained in neural cells NC1 to NC4 is connected to all the neurons contained in neural layer L1, and each neuron contained in neural cells NC5 to NC8 is connected to all the neurons contained in neural layer L3.

Adopting this structure, the size of the data processing system can be reduced by omitting the connections between neurons that are not involved in the data processing where the relationship between neurons becomes stronger at later processing steps than the one corresponding to neural cells NC1 to NC4 and where it becomes weaker at later processing steps close to neural cells NC5 to NC8.

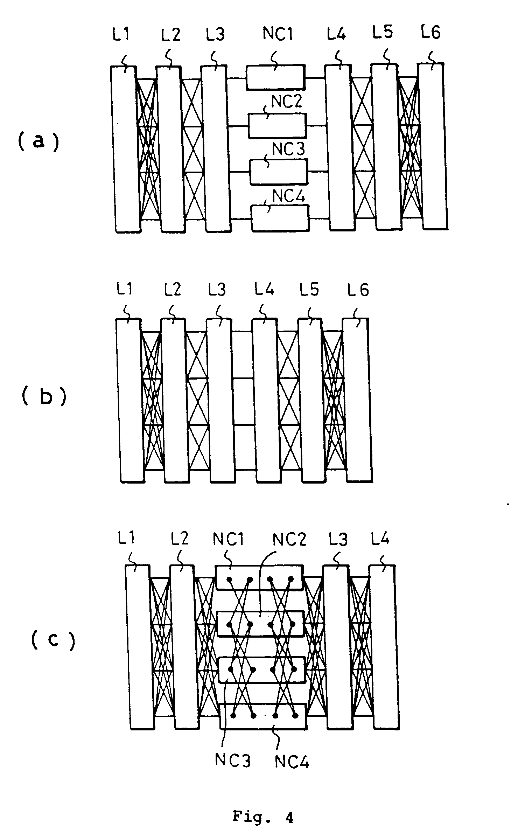

Fig. 4 (a) shows the tenth embodiment. The data processing system in this embodiment comprises neural layers L1 to L3 at the input side, neural layers L4 to L6 at the output side, and neural cells NC1 to NC4 in the middle. Neural layers L3 and L4 are connected to neural cells NC1 to NC4.

The neurons in neural layer L1 are connected to all the neurons in neural layer L2, whose neurons are connected to only a part of neurons in neural layer L3. The largest number of connections occurs between neurons contained in neural layers L1 and L2 respectively, and the smallest number of connections occurs between neurons contained in neural layers L3 and neural cells NC1 to NC4. Namely, the number of connections between neurons decreases at later processing steps close to neural cells NC1 to NC4.

The neurons in the neural cells NC1 to NC4 are connected to only a part of neurons in neural layer L4, whose neurons are also connected to only a part of neurons in neural layer L5. Comparing their number of connections, the number of connections between neurons contained in neural layers L4 and L5 is the highest one. Each neuron contained in neural layer L5 is connected to all the neurons contained in neural layer L6. The number of connections between neurons increases at later processing steps, from neural cells NC1, NC2, NC3 and NC4 to neural layer L6.

Neural cells NC1 to NC4 are completely separated from one another as shown in the seventh embodiment. Each neuron contained in a neural cell is not connected to the neurons contained in other neural cells.

In the present embodiment, the number of connections changes in neural layers in the middle towards the first processing step and the last processing step.

The size of the data processing system can be reduced by omitting the connections between neurons that are not involved in the data processing where the relationship between data to be outputted from each neuron is weak in the middle and gets stronger towards the first processing step and towards the last processing step.

Fig. 4 (b) shows the eleventh embodiment. The data processing system showed in Fig. 4 (b) does not comprise a neural cell but comprises neural layers L1 to L6. The neurons contained in neural layer L1 are connected to all the neurons contained in neural layer L2. The neurons contained in neural layer L2 and L3 are connected to only a part of the neurons contained in neural layers L3 and L4, respectively. The number of connections decreases as the processing step gets nearer to L4.

Neurons contained in neural layer L4 are connected to only a part of neurons contained in neural layer L5: the number of connections is higher than that between neural layer L3 and L4. The neurons contained in neural layer L5 are connected to all the neurons contained in L6. The number of connections increases from neural layer L3 to neural layer L1 and from neural layer L4 to neural layer L6.

The size of the data processing system shown in the eleventh embodiment can be reduced by omitting the connection between neurons that are not involved in the data processing in the case where the relationship between data to be outputted from each neuron is weak in the middle and gets stronger towards the first processing step and towards the last processing step.

Fig. 4 (c) shows the twelfth embodiment. The data processing system shown in fig. 4 (c) comprises neural layers L1 and L2 at the input side, neural layers L3 and L4 at the output side, and neural cells NC1 to NC4 in the middle. The neurons contained in neural layer L1 are connected to all the neurons contained in neural layer L2, whose neurons are connected to all the neurons contained in neural cells NC1 to NC4. In the same way, neurons in neural cells NC1 to NC4 are connected to all the neurons contained in neural layer L3, whose neurons are connected to all the neurons contained in neural layer L4. The neurons contained in neural cells NC1 to NC4 are connected to only a part of neurons contained in other neural cells, in a different way from the structure shown in the embodiment in Fig. 4 (a). The neurons contained in neural cells NC1 to NC4 are connected to a part of neurons contained in other neural cells lying near the neural layer L2. The smallest number of connections occurs the middle: it increases towards neural layers L1 and L4 respectively.

Adopting this structure, it is possible to reduce the size of the data processing system by omitting the connections between neurons that are not involved in the data processing and controlling the number of connections to be the minimum possible in the case where the relationship between neurons is weak in the middle within the limits from neural cell NC1 to NC4.

There is another way to execute the embodiment in Fig. 4 (a). That is: extracting output data from neural cells NC1 to NC4, which are placed in the middle of a data processing system, and input them to other neural network.

Fig. 5 shows an embodiment in which neural cells are settled in the middle of plural neural networks. In this figure, the neurons contained in neural networks from the first to the third - that is, neural networks N1 to N3 - are connected to the neurons in the first to the third neural cells - that is, neural cells C1 to C3 - respectively. The neurons contained in neural cells the first to the third - that is, neural cells C1 to C3 - are connected to the fourth neural network N4. In this embodiment, the neurons contained in each neural network are connected to all the neurons contained in adjacent neural layers. Neural cells C1 to C3 are not connected with each other, and the neurons contained in neural cells C1 to C3 are not connected to the neurons contained in other neural cells. Therefore, the number of connections is reduced to the minimum and data processing can be more effective.

As mentioned above, the data processing system related to in the present invention controls the number of connections between neurons, since neurons contained in the data processing system are not connected to all the neurons contained in adjacent neural layers. Therefore, it is possible to reduce the size of the data processing system.

## Claims

1. A data processing system comprising:

   a plurality of neural layers each including a plurality of neurons placed in a first layer and in at least one intermediate layer and a last neural layer, said first layer receiving input data and processing said input data to transmit a processed result to at least one intermediate layer, each intermediate layer receiving data processed by a previous layer processing said data and outputing data in the form of a processed result, said last neural layer connected to receive data processed by a previous layer so as to process said data and to output output data,

   wherein a plurality of groups of neurons are defined for each neural layer and a plurality of hexagonal-shaped groups of neural cells, included in a plurality of neural layers are defined by said groups, said neural cells not being connected to each other and each neuron being provided in a neural cell being connected to a neuron of an adjacent layer but not to neurons being contained in other neural cells, and wherein the number of neural layers is decreased by calculating beforehand the difference of degrees of abstraction of data between input data and the data to be finally outputted and wherein in order to minimise the number of connections between neurons,

   connections between neurons that are not involved in data processing are omitted, and

   wherein said input data is image data which is divided into a plurality of local areas of a hexagonal shape; and

   means for performing hexagonal convolution image processing between said hexagonal shape input data and said plurality of hexagonal neural cells, further comprising a neural network with a plurality of layers connected to said last neural layer for receiving said output data so as to extract a resultant data from said output data, wherein the number of connections between neurons being contained in adjacent layers of said neural network increases or decreases departing from a reference layer either versus the input or versus the output layer.

2. A data processing system comprising:

   a plurality of neural layers each including a plurality of neurons placed in a first layer and in at least one intermediate layer and a last neural layer, said first layer receiving an input data and processing said input data to transmit a processed result to at least one intermediate layer, each intermediate layer receiving data processed by a previous layer processing said data and outputing data in the form of a processed result, said last neural layer connected to receive data processed by a previous layer so as to process said data and to output output data,

wherein a plurality of groups of neurons are defined for each neural layer and a plurality of hexagonal-shaped neural cells including a plurality of neural layers are defined by said groups, said neural cells not being connected to each other and each neuron being provided in a neural cell being connected to a neuron of an adjacent layer but not to neurons being contained in other neural cells, and wherein the number of neural layers is decreased by calculating beforehand the difference of degrees of abstraction of data between input data and the data to be finally outputted and wherein in order to minimise the connections between neurons, connections between neurons that are not involved in data processing are omitted, and

wherein said input data is image data which is divided into plurality of local areas of a hexagonal shape; and

means for performing hexagonal convolution image processing between said hexagonal shape input data and said plurality of hexagonal neural cells, further comprising a neural network with a plurality of layers connected to said first neural layer for receiving said input data to said first neural layer, wherein the number of connections between neurons being contained in adjacent layers of said neural network increases or decreases departing from a reference layer either versus the input or versus the output layer.

3. A data processing system according to claim 1 or 2, wherein said number of connections between neurons being contained in adjacent layers of said neural network increases monotonously.

4. A data processing system according to claim 1 or 2, wherein said number of connections between neurons being contained adjacent layers of said neural network decreases monotonously.

**Patentansprüche**

1. Datenverarbeitungssystem mit:

einer Vielzahl von Neuronenschichten, von denen jede eine Vielzahl von Neuronen enthält, die sich in einer ersten Schicht, zumindest einer mittleren Schicht und einer letzten Schicht befinden, wobei die erste Schicht Eingangsdaten empfängt und die Eingangsdaten verarbeitet, um ein Verarbeitungsergebnis zumindest an eine mittlere Schicht zu übertragen, wobei jede mittlere Schicht Daten empfängt, die von einer vorhergehenden Schicht verarbeitet wurden und diese Daten verarbeitet, um Daten in Form eines Verarbeitungsergebnisses auszugeben, wobei die letzte Schicht so verbunden ist, daß sie Daten empfängt, die von einer vorhergehenden Schicht verarbeitet wurden, um diese Daten zu verarbeiten und als Ausgangsdaten auszugeben,

wobei eine Vielzahl von Gruppen von Neuronen für jede Neuronenschicht definiert ist und eine Vielzahl von hexagonal geformten Gruppen von neuronalen Zellen, die in einer Vielzahl von neuronalen Schichten enthalten sind, durch die Gruppen definiert werden, wobei die neuronalen Zellen nicht miteinander verbunden sind und jedes Neuron, das in einer neuronalen Zelle vorhanden ist, mit einem Neuron einer angrenzenden Schicht verbunden ist, aber nicht mit Neuronen, die in anderen neuronalen Zellen enthalten sind, und wobei die Anzahl der neuronalen Schichten verringert ist, indem vorher die Differenz des Datenabstraktionsgrades zwischen Eingangsdaten und den schließlich ausgegebenen Daten berechnet wird und wobei zum Minimieren der Anzahl der Verbindungen zwischen Neuronen diejenigen Verbindungen zwischen Neuronen weggelassen werden, die nicht in die Datenverarbeitung mit einbezogen sind, und

wobei die Eingangsdaten Bilddaten darstellen, die in eine Vielzahl von lokalen Bereichen mit hexagonaler Form aufgeteilt sind; und

einer Einrichtung zum Ausführen einer hexagonalen Bildfaltungsverarbeitung zwischen den hexagonalförmigen Eingangsdaten und der Vielzahl von hexagonalen neuronalen Zellen, wobei weiterhin ein neuronales Netzwerk mit einer Vielzahl von Schichten vorgesehen ist, das mit der letzten neuronalen Schicht verbunden ist, um die Ausgangsdaten zu empfangen und um Ergebnisdaten von den Ausgangsdaten zu extrahieren, wobei die Anzahl der Verbindungen zwischen Neuronen, die in angrenzenden Schichten des neuronalen Netzwerks vorhanden sind, in bezug auf eine Referenzschicht zur Eingangsschicht oder zur Ausgangsschicht hin zunehmen oder abnehmen.

2. Datenverarbeitungssystem mit:

EP 0 420 254 B1

einer Vielzahl von Neuronenschichten, von denen jede eine Vielzahl von Neuronen enthält, die sich in einer ersten Schicht, zumindest einer mittleren Schicht und einer letzten Schicht befinden, wobei die erste Schicht Eingangsdaten empfängt und die Eingangsdaten verarbeitet, um ein Verarbeitungsergebnis zumindest an eine mittlere Schicht zu übertragen, wobei jede mittlere Schicht Daten empfängt, die von einer vorhergehenden Schicht verarbeitet wurden und diese Daten verarbeitet, um Daten in Form eines Verarbeitungsergebnisses auszugeben, wobei die letzte Schicht so verbunden ist, daß sie Daten empfängt, die von einer vorhergehenden Schicht verarbeitet wurden, um diese Daten zu verarbeiten und als Ausgangsdaten auszugeben,

wobei eine Vielzahl von Gruppen von Neuronen für jede Neuronenschicht definiert ist und eine Vielzahl von hexagonal geformten Gruppen von neuronalen Zellen, die in einer Vielzahl von neuronalen Schichten enthalten sind, durch die Gruppen definiert werden, wobei die neuronalen Zellen nicht miteinander verbunden sind und jedes Neuron, das in einer neuronalen Zelle vorhanden ist, mit einem Neuron einer angrenzenden Schicht verbunden ist, aber nicht mit Neuronen, die in anderen neuronalen Zellen enthalten sind, und wobei die Anzahl der neuronalen Schichten verringert ist, indem vorher die Differenz des Datenabstraktionsgrades zwischen Eingangsdaten und den schließlich ausgegebenen Daten berechnet wird und wobei zum Minimieren der Anzahl der Verbindungen zwischen Neuronen diejenigen Verbindungen zwischen Neuronen weggelassen werden, die nicht in die Datenverarbeitung mit einbezogen sind, und

wobei die Eingangsdaten Bilddaten darstellen, die in eine Vielzahl von lokalen Bereichen mit hexagonaler Form aufgeteilt sind; und

einer Einrichtung zum Ausführen einer hexagonalen Bildfaltungsverarbeitung zwischen den hexagonalförmigen Eingangsdaten und der Vielzahl von hexagonalen neuronalen Zellen, wobei weiterhin ein neuronales Netzwerk mit einer Vielzahl von Schichten vorgesehen ist, das mit der zweiten neuronalen Schicht verbunden ist, um die Eingangsdaten für die erste Schicht zu empfangen, wobei die Anzahl der Verbindungen zwischen Neuronen, die in angrenzenden Schichten des neuronalen Netzwerks vorhanden sind, in bezug auf eine Referenzschicht zur Eingangsschicht oder zur Ausgangsschicht hin zunehmen oder abnehmen.

3. Datenverarbeitungssystem nach Anspruch 1 oder 2, wobei die Anzahl der Verbindungen zwischen Neuronen, die in angrenzenden Schichten des neuronalen Netzwerkes enthalten sind, monoton zunehmen.

4. Datenverarbeitungssystem nach Anspruch 1 oder 2, wobei die Anzahl der Verbindungen zwischen Neuronen, die in angrenzenden Schichten des neuronalen Netzwerkes enthalten sind, monoton abnehmen.

**Revendications**

1. Système de traitement de données comprenant :

une pluralité de couches neuronales incluant chacune une pluralité de neurones placés dans une première couche et dans au moins une couche intermédiaire et une dernière couche neuronale, ladite première couche recevant des données d'entrée et traitant lesdites données d'entrée pour transmettre un résultat traité à au moins une couche intermédiaire particulière, chaque couche intermédiaire recevant des données traitées par une couche précédente traitant lesdites données et sortant les données sous la forme d'un résultat traité, ladite dernière couche neuronale étant reliée pour recevoir des données traitées par une couche précédente de façon à traiter lesdites données et de façon à sortir des données de sortie, dans lequel une pluralité de groupes de neurones est définie pour chaque couche neuronale et une pluralité de groupes de cellules neuronales en forme d'hexagone, inclus dans une pluralité de couches neuronales, est définie par lesdits groupes, lesdites cellules neuronales n'étant pas reliées les unes aux autres et chaque neurone étant disposé dans une cellule neuronale reliée à un neurone d'une couche adjacente mais pas aux neurones contenus dans d'autres cellules neuronales, et dans lequel le nombre de couches neuronales est diminué en calculant à l'avance la différence de degrés d'abstraction des données entre des données d'entrée et les données à sortir en final et dans lequel, afin de minimiser le nombre de connexions entre les neurones, les connexions entre les neurones qui ne sont pas impliqués dans le traitement de données sont omises, et dans lequel lesdites données d'entrée sont des données d'image qui sont divisées en une pluralité de zones locales d'une forme hexagonale ; et des moyens pour effectuer un traitement d'image de convolution hexagonale entre lesdites données d'entrée de forme hexagonale et ladite pluralité de cellules neuronales hexagonales, comprenant de plus un réseau neuronal ayant une pluralité de couches reliées à ladite dernière couche neuronale pour recevoir lesdites données de sortie de façon à extraire des données résultantes à partir desdites données de sortie, dans lequel le nombre de connexions entre des neurones contenus dans des couches adjacentes dudit réseau neuronal augmente ou diminue en s'écartant d'une couche de référence soit par rapport à la couche d'entrée soit par rapport à la couche de sortie.

2. Système de traitement de données comprenant :

une pluralité de couches neuronales incluant chacune une pluralité de neurones placés dans une première couche et dans au moins une couche intermédiaire et une dernière couche neuronale, ladite première couche recevant des données d'entrée et traitant lesdites données d'entrée pour transmettre un résultat traité à au moins une couche intermédiaire particulière, chaque couche intermédiaire recevant des données traitées par une couche précédente traitant lesdites données et sortant les données sous la forme d'un résultat traité, ladite dernière couche neuronale étant reliée pour recevoir des données traitées par une couche précédente de façon à traiter lesdites données et de façon à sortir des données de sortie, dans lequel une pluralité de groupes de neurones est définie pour chaque couche neuronale et une pluralité de cellules neuronales en forme d'hexagone, incluant une pluralité de couches neuronales, est définie par lesdits groupes, lesdites cellules neuronales n'étant pas reliées les unes aux autres et chaque neurone étant disposé dans une cellule neuronale reliée à un neurone d'une couche adjacente mais pas aux neurones contenus dans d'autres cellules neuronales, et dans lequel le nombre de couches neuronales est diminué en calculant à l'avance la différence de degrés d'abstraction des données entre des données d'entrée et les données à sortir en final et dans lequel, afin de minimiser le nombre de connexions entre les neurones, les connexions entre les neurones qui ne sont pas impliqués dans le traitement de données sont omises, et dans lequel lesdites données d'entrée sont des données d'image qui sont divisées en une pluralité de zones locales d'une forme hexagonale ; et des moyens pour effectuer un traitement d'image de convolution hexagonale entre lesdites données d'entrée de forme hexagonale et ladite pluralité de cellules neuronales hexagonales, comprenant de plus un réseau neuronal ayant une pluralité de couches reliées à ladite première couche neuronale pour recevoir lesdites données d'entrée pour ladite première couche neuronale, dans lequel le nombre de connexions entre des neurones contenus dans des couches adjacentes dudit réseau neuronal augmente ou diminue en s'écartant d'une couche de référence soit par rapport à la couche d'entrée soit par rapport à la couche de sortie.

3. Système de traitement de données selon la revendication 1 ou 2, dans lequel ledit nombre de connexions entre des neurones contenus dans des couches adjacentes dudit réseau neuronal augmente de façon monotone.

4. Système de traitement de données selon la revendication 1 ou 2, dans lequel ledit nombre de connexions entre des neurones contenus dans des couches adjacentes dudit réseau neuronal diminue de façon monotone.

Fig. 1

Fig. 2

Fig. 3

Fig. 4

Fig. 5

Fig. 6

Fig. 7

N C

F

Fig. 8

I    II    III    N

N R

Fig. 9

Fig. 10

Fig. 11

Fig. 12

Fig. 13

I N T

P 1

P 2

P n

Fig. 14

Fig. 15

Fig. 16

Fig. 17